# EUROPÄISCHE PATENTSCHRIFT

(11) **EP 3 462 160 B1**
(45) Veröffentlichungstag und Bekanntmachung des Hinweises auf die Patenterteilung: **16.08.2023**
(21) Anmeldenummer: 18194715.1
(22) Anmeldetag: 17.09.2018
(51) Int. Cl.: G01N 1/22

(54) **RÜCKSPÜLVORRICHTUNG FÜR FILTER EINES PROBENAHMESYSTEMS**
PURGING DEVICE FOR THE FILTER OF A SAMPLING SYSTEM
DISPOSITIF DE PURGE POUR FILTRE D'UN SYSTÈME D'ÉCHANTILLONNAGE

(30) Priorität: 27.09.2017 AT 5017917 U
(43) Veröffentlichungstag der Anmeldung: 03.04.2019
(73) Patentinhaber: JCT Analysentechnik GmbH, 2700 Wiener Neustadt (AT)
(72) Erfinder: Grechshammer, Thomas, 7442 Lockenhaus (AT); Vancl, Berndt, 2340 Mödling (AT); Zimmel, Günter, 1030 Wien (AT)
(74) Vertreter: Margotti, Herwig Franz

(56) Entgegenhaltungen:
- EP-A2- 0 724 145
- DE-A1- 4 114 749
- DE-U1- 9 304 225
- US-A- 5 296 197

## Beschreibung

Die Erfindung betrifft eine Rückspülvorrichtung für Filter eines Probenahmesystems mit einem Anschlusselement, das von einer mit dem Filter verbindbaren Entnahmeleitung durchlaufen wird, und das zumindest eine in die Entnahmeleitung einmündende Rückspülleitung aufweist, mit einem an oder in der Rückspülleitung angeordneten Rückschlagventil, wobei das Rückschlagventil mit einer Druckleitung für unter Druck stehendes Spülmedium verbindbar ist, sodass bei offenem Rückschlagventil die Rückspülleitung von dem Spülmedium in einer zur Entnahmeleitung hin verlaufenden Rückspülrichtung durchströmbar ist.

Probenahmesysteme mit Rückspülvorrichtungen werden beispielsweise in Schornsteinen oder Abgasanlagen in verschiedenen Industriebereichen eingesetzt, um beispielsweise gasförmige oder flüssige Medien zu beproben. Hierfür wird ein Filter in beispielsweise einen Schornstein eingebracht. Dieser Filter ist mit einer Entnahmeleitung des Probenahmesystems verbunden, durch welche Probenmaterial entnommen werden kann. Das Probenahmesystem extrahiert bei einer Probenahme Probenmaterial aus einem zu beprobenden Medium durch den Filter, wobei das zu beprobende Medium oftmals Verschmutzungen beziehungsweise Schwebstoffe enthält. Aus diesem Grund verschmutzt der Filter sowohl im Zuge von wiederholten Probenahmen, als auch kontinuierlich durch die ständige Exposition gegenüber dem zu beprobenden Medium. Verschmutzte Filter führen dazu, dass bei jeder Beprobung weniger Probenmaterial entnommen werden kann, beziehungsweise ein höherer Unterdruck zur Probenahme in der Entnahmeleitung aufgebaut werden muss. Hierdurch steigt die Belastung des Probenahmesystems kontinuierlich, was zu einer verringerten Leistung, erhöhtem Komponentenverschleiß und einer größeren Wahrscheinlichkeit für Systemausfälle führt.

Um diesem Prozess entgegenzuwirken, werden die Filter von Probenahmesystemen mit einer Rückspülvorrichtung gereinigt. Diese presst im Zuge eines Reinigungsvorganges ein Spülmedium in einer Rückspülrichtung, welche in der Entnahmeleitung entgegen einer Entnahmerichtung für Probenmaterial verläuft, durch den Filter. Hierbei werden Verschmutzungen, welche sich an dem Filter abgelagert haben, entfernt, und die Funktionalität des Probenahmesystems kann über einen längeren Zeitraum gewährleistet werden, als wenn eine derartige Vorrichtung nicht zur Verfügung steht. Hierdurch können auch die Intervalle für einen Tausch der Filter verlängert werden, wodurch eine höhere Verfügbarkeit des Probenahmesystems erreicht wird.

Das Dokument US 5,296,197 A offenbart eine Probenahmevorrichtung mit einer Einlassleitung und einer Entnahmeleitung. Die Probenahmevorrichtung wird von einer zentralen Bohrung durchlaufen. Die zentrale Bohrung, die Einlassleitung und die Entnahmeleitung münden jeweils in eine Probenkammer. Die zentrale Bohrung dient zur Aufnahme eines Ventilbetätigungsstabs, welcher zur Probenahme dient. Die Einlassleitung und die Entnahmeleitung sind nur über die Probenkammer verbunden und münden nicht ineinander ein.

Rückspülvorrichtungen gemäß dem Stand der Technik weisen ein Anschlusselement auf, welches von der Entnahmeleitung durchlaufen wird. Im Anschlusselement mündet eine Rückspülleitung in die Entnahmeleitung ein, durch welche das Spülmedium in die Entnahmeleitung eingebracht wird. In herkömmlichen Rückspülvorrichtungen mündet die Rückspülleitung in einem rechten Winkel in die Entnahmeleitung. Rückspülvorrichtungen gemäß dem Stand der Technik weisen den Nachteil auf, dass diese Anordnung zu einem erheblichen Strömungswiderstand für das Spülmedium führt. Dies wirkt sich negativ auf die Leistung der Rückspülvorrichtung und die Effektivität der Filterreinigung aus. Um diesen Effekt entgegenzuwirken, muss in Rückspülvorrichtungen gemäß dem Stand der Technik ein erheblicher Druck und eine erhebliche Menge an Rückspülmedium für einen Reinigungsvorgang angewendet werden. Hierdurch ist es notwendig, die Komponenten der Rückspülvorrichtung entsprechend massiv auszuführen, was eine negative Auswirkung auf die Produktionskosten der Rückspülvorrichtung, beziehungsweise des kompletten Probenahmesystems hat.

Es ist die Aufgabe der vorliegenden Erfindung, eine Rückspülvorrichtung für Filter eines Probenahmesystems zu schaffen, welche die oben angeführten Nachteile überwindet.

Erfindungsgemäß wird die vorliegende Aufgabe dadurch gelöst, dass die Rückspülleitung in einem, in Rückspülrichtung gesehen, stumpfen Winkel in die Entnahmeleitung einmündet.

Die erfindungsgemäße Ausführung der Rückspülvorrichtung für Filter eines Probenahmesystems umfasst ein Anschlusselement, das von einer mit dem Filter verbindbaren Entnahmeleitung durchlaufen wird. Das Anschlusselement weist zudem zumindest eine in die Entnahmeleitung einmündende Rückspülleitung auf. Die Rückspülvorrichtung umfasst ein Rückschlagventil, welches mit einer Druckleitung für unter Druck stehendes Spülmedium verbindbar ist, wobei das Rückschlagventil an oder in der Rückspülleitung angeordnet ist. Bei offenem Rückschlagventil kann das Spülmedium die Rückspülleitung in einer zur Entnahmeleitung hin verlaufenden Rückspülrichtung durchströmen. Bei der erfindungsgemäßen Rückspülvorrichtung mündet die Rückspülleitung in einem, in Rückspülrichtung gesehen, stumpfen Winkel in die Entnahmeleitung ein. Durch den stumpfen Winkel zwischen Rückspülleitung und Entnahmeleitung wirkt vorteilhafterweise ein wesentlich geringerer Strömungswiderstand auf das strömende Spülmedium. Besonders vorteilhaft ist, dass hierdurch eine höhere Strömungsgeschwindigkeit des Spülmediums realisiert werden kann, als bei Rückspülvorrichtungen gemäß dem Stand der Technik. Hierdurch wird eine verbesserte Reinigungsfunktion für den Filter erzielt.

Erfindungsgemäß weist das Anschlusselement eine Mehrzahl von Rückspülleitungen auf, die radial um die Entnahmeleitung angeordnet sind. Somit kann im Vergleich zum Stand der Technik eine größere Menge an Spülmedium in die Entnahmeleitung eingebracht werden, wodurch eine weitere Verbesserung der Reinigungsleistung der Rückspülvorrichtung erzielt wird.

Gemäß einer Ausführungsvariante der Rückspülvorrichtung ist das Rückschlagventil mit einer Mehrzahl von Rückspülleitungen verbunden. Hierdurch wird ein besonders einfacher und kostengünstiger Aufbau der Rückspülvorrichtung bei gleichzeitig hoher Reinigungsleistung erzielt.

Gemäß einer anderen Ausführungsvariante weist die Rückspülvorrichtung eine Mehrzahl von Rückschlagventilen auf, wobei jede Rückspülleitung mit jeweils einem Rückschlagventil verbunden ist. Hierdurch wird der Vorteil erreicht, dass auch besonders große Filter durch die erfindungsgemäße Rückspülvorrichtung gereinigt werden können.

Gemäß der bevorzugten Ausführungsform weist die Entnahmeleitung ein Filterende auf, an welchem die Entnahmeleitung mit dem Filter verbindbar ist. Die Entnahmeleitung weist zudem in dieser Ausführungsform eine in Richtung des Filterendes verlaufende Erweiterung der Querschnittsfläche auf. Dadurch werden innerhalb der Entnahmeleitung unterschiedliche Strömungsgeschwindigkeiten für das Rückspülmedium beziehungsweise das Probenmaterial realisiert und Turbulenzen unterdrückt.

Gemäß der bevorzugten Ausführungsform liegt die Erweiterung der Querschnittsfläche der Entnahmeleitung in einem Bereich vor, in welchem die Rückspülleitung in die Entnahmeleitung einmündet. Hierdurch wird der Strömungswiderstand für das Rückspülmedium weiter reduziert.

Die Druckleitung ist in der bevorzugten Ausführungsform mit der Rückspülleitung verbunden, wobei die Druckleitung ein Magnetventil aufweist. Hierdurch ergibt sich der Vorteil, dass sprunghafte Anstiege des Drucks des Spülmediums realisiert werden können. Besonders vorteilhaft ist, dass durch die solcherart erzeugten Stoßwellen des Spülmediums die Reinigungsleistung der Rückspülvorrichtung weiter verbessert wird.

In einer Ausführungsvariante der Rückspülvorrichtung ist die Druckleitung mit einem Druckreservoir verbunden. Das Druckreservoir enthält unter Druck stehendes Spülmedium. Hierdurch wird der Vorteil erreicht, dass die Bereitstellung des Rückspülmediums passiv, ohne die Verwendung zusätzlicher, beispielsweise strombetriebener Aggregate, erfolgt.

Gemäß einer anderen Ausführungsvariante der Rückspülvorrichtung ist die Druckleitung mit einer Druckerzeugungseinheit verbunden, welche dazu ausgebildet ist, Spülmedium unter Druck bereitzustellen. Hierdurch kann ein kontinuierlicher Spülmittelfluss mit variablem Druck realisiert werden. Die Druckerzeugungseinheit kann beispielsweise in Form eines Verdichters vorliegen.

Vorteilhafte Ausgestaltungen der erfindungsgemäßen Rückspülvorrichtung sowie alternative Ausführungsvarianten werden in weiterer Folge anhand der Figuren näher erläutert.
Figur 1 zeigt eine Schnittdarstellung einer erfindungsgemäße Rückspülvorrichtung in Seitenansicht.
Figur 2 zeigt eine Schnittdarstellung eines Anschlusselements der erfindungsgemäßen Rückspülvorrichtung in Seitenansicht.

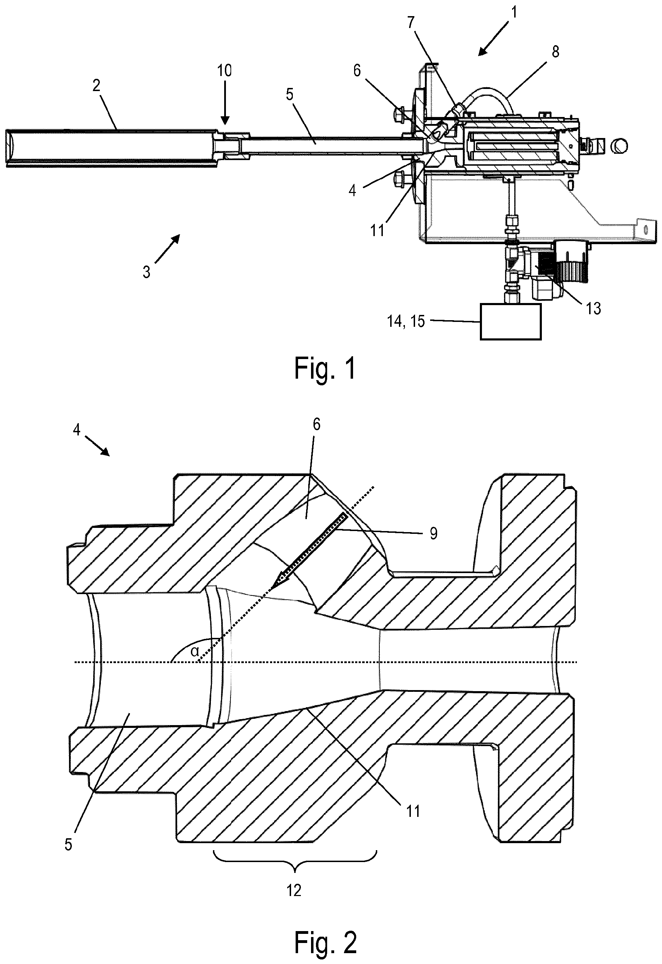

Figur 1 zeigt eine erfindungsgemäße Rückspülvorrichtung 1 für Filter 2 eines Probenahmesystems 3 mit einem Anschlusselement 4. Das Anschlusselement 4 wird von einer Entnahmeleitung 5 durchlaufen, die in dieser Ausführung als Durchgangsbohrung realisiert ist. Im Anschlusselement 4 mündet eine Rückspülleitung 6 in die Entnahmeleitung 5 ein. Die Rückspülvorrichtung 1 weist des Weiteren ein Rückschlagventil 7 auf, welches an oder in der Rückspülleitung 6 angeordnet ist. Das Rückschlagventil 7 ist mit einer Druckleitung 8 für unter Druck stehendes Spülmedium verbindbar. In Figur 1 ist die Druckleitung 8 mit dem Rückschlagventil 7 verbunden dargestellt. Erfindungsgemäß kann das Rückschlagventil auch in die Druckleitung 8 eingebaut sein. Bei geöffnetem Rückschlagventil 7 ist die Rückspülleitung 6 von dem Spülmedium durchströmbar, wobei dieses hierbei in einer zur Entnahmeleitung 5 hin verlaufenden Rückspülrichtung 9, welche in Figur 2 durch einen Pfeil dargestellt ist, strömt. Die Rückspülleitung 6 mündet in einem, in Rückspülrichtung 9 gesehenen, stumpfen Winkel α, welcher ebenfalls in Figur 2 dargestellt ist, in die Entnahmeleitung 5 ein. Der stumpfe Winkel α liegt hierbei in einem Bereich zwischen 90° und 180°, vorzugsweise in einem Bereich von 120° bis 160°. Beim Vorgang der Filterreinigung strömt das Rückspülmedium durch die Rückspülleitung 6 in die Entnahmeleitung 5 und weiter durch den Filter 2. Hierdurch wird der Filter 2 von Ablagerungen und Verschmutzungen gereinigt, die nach außen ausgetragen werden. Durch die erfindungsgemäße Ausführung der Rückspülvorrichtung 1, insbesondere durch den stumpfen Winkel α zwischen der Rückspülleitung 6 und der Entnahmeleitung 5, wird der Strömungswiederstand, welcher durch die Einmündung der Rückspülleitung 6 in die Entnahmeleitung 5 erzeugt wird, reduziert. Besonders vorteilhaft ist hierbei, dass der Druckverlust des Spülmediums innerhalb der Rückspülvorrichtung 1 reduziert und eine höhere Anströmgeschwindigkeit des Spülmediums auf den Filter 2 erreicht werden. Hierdurch wird die die Effektivität der Filterreinigung gesteigert.

Figur 2 zeigt das Anschlusselement 4 der erfindungsgemäßen Rückspülvorrichtung 1 in einer Schnittdarstellung, wobei die Rückspülleitung 6 und die das Anschlusselement 4 durchlaufende Entnahmeleitung 5 dargestellt sind. Des Weiteren ist die von der Rückspülleitung 6 zur Entnahmeleitung 5 verlaufende Rückspülrichtung 9 dargestellt, sowie der stumpfe Winkel α zwischen der Rückspülleitung 6 und der Entnahmeleitung 5. Zur besseren Darstellung des stumpfen Winkels α sind zudem die Längsachsen der Entnahmeleitung 5 und der Rückspülleitung 6 im Anschlusselement 4 mit punktierten Linien dargestellt.

In der Ausführungsform der Rückspülvorrichtung 1 gemäß der Erfindung weist das Anschlusselement 4 eine Mehrzahl von Rückspülleitungen 6 auf. Diese sind in dieser Ausführungsform radial um die Entnahmeleitung 5 herum angeordnet. Hierdurch wird der Vorteil erreicht, dass eine größere Menge an Spülmedium verteilt in die Entnahmeleitung 5 eingebracht werden kann. Dies ist insbesondere für größere Filter 2 vorteilhaft, um eine gute Reinigungswirkung zu erzielen. Durch die radiale Anordnung der Rückspülleitungen 6 um die Entnahmeleitung 5 wird zudem der Vorteil erreicht, dass das Anschlusselement 4 keine vergrößerten Abmessungen im Vergleich zu einem Anschlusselement 4 mit nur einer Rückspülleitung 6 aufweist. Hierdurch wird zudem ermöglicht, ein Anschlusselement 4 mit nur einer Rückspülleitung 6 durch ein Anschlusselement 4 mit mehreren Rückspülleitungen 6 ohne umfassende konstruktive Änderungen an der gesamten Rückspülvorrichtung 1 beziehungswese dem Probenahmesystem 3 zu ersetzen.

Gemäß einer Ausführungsvariante ist das in Figur 1 dargestellte Rückschlagventil 7 mit einer Mehrzahl von Rückspülleitungen 6 verbunden. Hierdurch wird der Vorteil erreicht, dass ein einfacher und kostengünstiger Aufbau der Rückspülvorrichtung 1 bei gleichzeitig hoher Reinigungsleistung realisiert wird. Des Weiteren kann die Rückspülvorrichtung 1 in einer anderen Ausführungsvariante auch eine Mehrzahl von Rückschlagventilen 7 aufweisen, wobei jede Rückspülleitung 6 mit jeweils einem Rückschlagventil 7 verbunden ist. Hierdurch können auch besonders große Filter 2 durch die erfindungsgemäße Rückspülvorrichtung 1 gereinigt werden.

Die Entnahmeleitung 5 der erfindungsgemäßen Rückspülvorrichtung 1 weist zudem ein Filterende 10 auf, welches in Figur 1 dargestellt ist. Der Filter 2 ist an dem Filterende 10 mit der Entnahmeleitung 5 verbindbar, wobei in Figur 1 das Filterende 10 mit einem verbundenen Filter 2 dargestellt ist. Gemäß der bevorzugten Ausführungsform weist die Entnahmeleitung 5 eine in Richtung des Filterendes 10 verlaufende Erweiterung 11 der Querschnittsfläche auf. In der bevorzugten Ausführungsform liegt diese Erweiterung 11 der Querschnittsfläche der Entnahmeleitung 5, wie in Figur 2 dargestellt, in einem Bereich 12 vor, in welchem die Rückspülleitung 6 in die Entnahmeleitung 5 einmündet. Wie in Figur 2 dargestellt liegt dieser Bereich 12 innerhalb des Anschlussstücks 4.

Gemäß der bevorzugten Ausführungsform der Rückspülvorrichtung 1 umfasst die Rückspülvorrichtung 1 des Weiteren die Druckleitung 8, welche mit der Rückspülleitung 6 verbunden ist. Die Druckleitung 8 weist ein Magnetventil 13 auf, welches in Figur 1 dargestellt ist. Hierdurch sind sprunghafte Anstiege des Drucks des Spülmediums realisierbar, wodurch das Spülmedium den Filter 2 stoßweise spült und eine hervorragende Reinigungsleistung der Rückspülvorrichtung 1 erzielt wird. In einer Ausführungsvariante kann die Druckleitung 8 zudem mit einem Druckreservoir 14 verbunden sein. Dieses enthält unter Druck stehendes Spülmedium. Das Druckreservoir 14 kann beispielsweise in Form einer Druckgasflasche oder einem Behälter mit unter Druck stehender Flüssigkeit bereitgestellt sein. Hierdurch wird der Vorteil erreicht, dass die Bereitstellung des Spülmediums passiv, ohne die Verwendung zusätzlicher, beispielsweise strombetriebener, Aggregate erfolgt. Weitere Formen von Druckreservoirs 14 ergeben sich für den Fachmann aus diesem beispielhaften Verweis. In einer weiteren Ausführungsvariante ist die Druckleitung 8 mit einer Druckerzeugungseinheit 15 verbunden. Die Druckerzeugungseinheit 15 stellt ebenfalls Spülmedium unter Druck bereit. Durch die Anwendung der Druckerzeugungseinheit 15 wird der Vorteil erreicht, dass ein kontinuierlicher Spülmittelfluss mit variablem Druck realisiert werden kann. Die Druckerzeugungseinheit 15 kann beispielsweise in Form eines Verdichters vorliegen. Beispielhaft seien hier Verdichter in Form von Kolbenkompressoren, Schraubenverdichter, Turboverdichter, usw. erwähnt. Weitere Formen von Verdichtern ergeben sich für den Fachmann aus diesem beispielhaften Verweis.

## Patentansprüche

1. Rückspülvorrichtung (1) für Filter (2) eines Probenahmesystems (3) mit einem Anschlusselement (4), und einer mit dem Filter verbindbaren Entnahmeleitung (5), wobei das Anschlusselement (4) von der Entnahmeleitung (5) durchlaufen wird, und zumindest eine in die Entnahmeleitung (5) einmündende Rückspülleitung (6) aufweist, mit einem an oder in der Rückspülleitung (6) angeordneten Rückschlagventil (7), wobei das Rückschlagventil (7) mit einer Druckleitung (8) für unter Druck stehendes Spülmedium verbindbar ist, sodass bei offenem Rückschlagventil (7) die Rückspülleitung (6) von dem Spülmedium in einer zur Entnahmeleitung (5) hin verlaufenden Rückspülrichtung (9) durchströmbar ist, wobei die Rückspülleitung (6) in einem, in Rückspülrichtung (9) gesehen, stumpfen Winkel (α) in die Entnahmeleitung (5) einmündet, wobei das Anschlusselement (4) eine Mehrzahl von Rückspülleitungen (6) aufweist, welche radial um die Entnahmeleitung (5) angeordnet sind.

2. Rückspülvorrichtung (1) gemäß Anspruch 1, wobei das Rückschlagventil (7) mit einer Mehrzahl von Rückspülleitungen (6) verbunden ist.

3. Rückspülvorrichtung (1) gemäß einem der Ansprüche 1 oder 2, wobei die Rückspülvorrichtung (1) eine Mehrzahl von Rückschlagventilen (7) aufweist, wobei jede Rückspülleitung (6) mit jeweils einem Rückschlagventil (7) verbunden ist.

4. Rückspülvorrichtung (1) gemäß einem der Ansprüche 1 bis 3, wobei die Entnahmeleitung (5) ein Filterende (10) aufweist, an welchem die Entnahmeleitung (5) mit dem Filter (2) verbindbar ist, wobei die Entnahmeleitung (5) eine in Richtung des Filterendes (10) verlaufende Erweiterung (11) der Querschnittsfläche aufweist.

5. Rückspülvorrichtung (1) gemäß Anspruch 4, wobei die Erweiterung (11) der Querschnittsfläche der Entnahmeleitung (5) in einem Bereich (12) vorliegt, in welchem die Rückspülleitung (6) in die Entnahmeleitung (5) einmündet.

6. Rückspülvorrichtung (1) gemäß einem der Ansprüche 1 bis 5, wobei die Druckleitung (8) mit der Rückspülleitung (6) verbunden ist, wobei die Druckleitung (8) ein Magnetventil (13) aufweist.

7. Rückspülvorrichtung (1) gemäß Anspruch 6, wobei die Druckleitung (8) mit einem Druckreservoir (14) verbunden ist, welches unter Druck stehendes Spülmedium enthält.

8. Rückspülvorrichtung (1) gemäß Anspruch 6, wobei die Druckleitung (8) mit einer Druckerzeugungseinheit (15) verbunden ist, welche dazu ausgebildet ist, Spülmedium unter Druck bereitzustellen.

9. Rückspülvorrichtung (1) gemäß Anspruch 8, wobei die Druckerzeugungseinheit (15) ein Verdichter ist.

10. Rückspülvorrichtung (1) gemäß einem der Ansprüche 1 bis 9, wobei der stumpfe Winkel (α) in einem Bereich zwischen 90° und 180°, vorzugsweise in einem Bereich von 120° bis 160° liegt.

## Claims

1. A backflush device (1) for filters (2) of a sampling system (3) having a connecting element (4), which is passed through by a retrieval line (5) that is connectable to the filter (2) and which has at least one backflush line (6) ending in the retrieval line (5), having a check valve (7) arranged at or in the backflush line (6), wherein the check valve (7) is connectable to a pressure line (8) for a pressurized flush medium such that in the case of an open check valve (7) the backflush line (6) may be flown through by the flush medium in a backflush direction (9) oriented towards the retrieval line (5), wherein the backflush line (6) ends in the retrieval line (5) at an obtuse angle (α), observed in the direction of the backflush direction (9), wherein the connecting element (4) has a plurality of backflush lines (6), which are arranged radially about the retrieval line (5).

2. A backflush device (1) according to claim 1, wherein the check valve (7) is connected to a plurality of backflush lines (6).

3. A backflush device (1) according to any of claims 1 or 2, wherein the backflush device (1) has a plurality of check valves (7), wherein each backflush line (6) is connected to respectively one check valve (7).

4. A backflush device (1) according to any of claims 1 to 3, wherein the retrieval line (5) has a filter end (10), at which the retrieval line (5) is connectable to the filter (2), wherein the retrieval line (5) has an expansion (11) of the cross-sectional area oriented in the direction of the filter end (10).

5. A backflush device (1) according to claim 4, wherein the expansion (11) of the cross-sectional area of the retrieval line (5) is present in a region (12), in which the backflush line (6) ends in the retrieval line (5).

6. A backflush device (1) according to any of claims 1 to 5, wherein the pressure line (8) is connected to the backflush line (6), wherein the pressure line (8) has a magnet valve (13).

7. A backflush device (1) according to claim 6, wherein the pressure line (8) is connected to a pressure reservoir (14), which contains pressurized flush medium.

8. A backflush device (1) according to claim 6, wherein the pressure line (8) is connected to a pressure generating unit (15), which is configured to provide flush medium under pressure.

9. A backflush device (1) according to claim 8, wherein the pressure generating unit (15) is a compressor.

10. A backflush device (1) according to any of claims 1 to 9, wherein the obtuse angle (α) lies in a range between 90° and 180°, preferably in a range of 120° to 160°.

## Revendications

1. Dispositif de purge (1) pour filtre (2) d'un système d'échantillonnage (3) avec un élément de raccordement (4) et une conduite de prélèvement (5) pouvant être reliée au filtre, dans lequel l'élément de raccordement (4) est traversé par la conduite de prélèvement (5) et présente au moins une conduite de purge (6) débouchant dans la conduite de prélèvement (5), avec un clapet anti-retour (7) disposé sur ou dans la conduite de purge (6), dans lequel le clapet anti-retour (7) peut être relié à une conduite sous pression (8) destinée à un produit de rinçage sous pression, de sorte que, lorsque le clapet anti-retour (7) est ouvert, la conduite de purge (6) peut être parcourue par le produit de rinçage dans une direction de purge (9) conduisant vers la conduite de prélèvement (5), dans lequel la conduite de purge (6) débouche dans la conduite de prélèvement (5) sous un angle obtus (α) vu dans la direction de purge (9) et dans lequel l'élément de raccordement (4) présente une pluralité de conduites de purge (6) qui sont disposées radialement autour de la conduite de prélèvement (5).

2. Dispositif de purge (1) selon la revendication 1, dans lequel le clapet anti-retour (7) est relié à une pluralité de conduites de purge (6).

3. Dispositif de purge (1) selon une des revendications 1 ou 2, lequel dispositif de purge (1) comporte une pluralité de clapets anti-retour (7), chaque conduite de purge (6) étant reliée à un clapet anti-retour (7).

4. Dispositif de purge (1) selon une des revendications 1 à 3, dans lequel la conduite de prélèvement (5) présente une queue de filtre (10) au niveau de laquelle la conduite de prélèvement (5) peut être reliée au filtre (2), la conduite de prélèvement (5) comportant un élargissement (11) de sa section transversale courant en direction de la queue de filtre (10).

5. Dispositif de purge (1) selon la revendication 4, dans lequel l'élargissement (11) de la section de la conduite de prélèvement (5) se trouve dans une région dans laquelle la conduite de purge (6) débouche dans la conduite de prélèvement (5).

6. Dispositif de purge (1) selon une des revendications 1 à 5, dans lequel la conduite sous pression (8) est reliée à la conduite de purge (6), la conduite sous pression (8) comportant une vanne magnétique (13).

7. Dispositif de purge (1) selon la revendication 6, dans lequel la conduite sous pression (8) est reliée à un réservoir sous pression (14) qui contient du produit de rinçage sous pression.

8. Dispositif de purge (1) selon la revendication 6, dans lequel la conduite sous pression (8) est reliée à une unité de pressurisation (15) qui est conçue pour mettre le produit de rinçage sous pression.

9. Dispositif de purge (1) selon la revendication 8, dans lequel l'unité de pressurisation (15) est un compresseur.

10. Dispositif de purge (1) selon une des revendications 1 à 9, dans lequel l'angle obtus (α) est situé sur une plage de 90° à 180°, de préférence sur une plage de 120° à 160°.
